# EUROPEAN PATENT SPECIFICATION

(11) **EP 3 318 898 B1**
(45) Date of publication and mention of the grant of the patent: **13.05.2020**
(21) Application number: 17198597.1
(22) Date of filing: 26.10.2017
(51) Int. Cl.: G01T 1/02

(54) **RADIATION MONITOR**
STRAHLUNGSMONITOR
MONITEUR DE RAYONNEMENT

(30) Priority: 02.11.2016 JP 2016215006
(43) Date of publication of application: 09.05.2018
(73) Proprietor: Hitachi, Ltd., Tokyo 100-8280 (JP)
(72) Inventor: UENO, Yuichiro, Tokyo, 100-8280 (JP); SAKAKIBARA, Yoshinobu, Tokyo, 100-8280 (JP); TADOKORO, Takahiro, Tokyo, 100-8280 (JP); UENO, Katsunori, Tokyo, 100-8280 (JP); HATAKEYAMA, Shuichi, Tokyo, 100-8280 (JP); NAGUMO, Yasushi, Tokyo, 100-8280 (JP); OKADA, Kouichi, Tokyo, 100-8280 (JP)
(74) Representative: MERH-IP Matias Erny Reichl Hoffmann Patentanwälte PartG mbB

(56) References cited:
- WO-A1-2016/091610
- WO-A1-2016/093074
- JP-A- H10 288 671
- JP-A- 2000 065 937
- US-A- 5 856 673
- US-A1- 2005 189 495

## Description

### Technical Field

The present invention relates to a radiation monitor.

### Background Art

As for a radiation monitor, it is described in a patent literature 1, for example, that the corresponding radiation monitor is provided with plural detectors that detect a radiation, filters provided to a surface sensitive to a radiation of each detector and having attenuation action mutually different and an arithmetic circuit that operates a radiation dose equivalent.

US 2005189495 A1 describes an elongated plate-shaped radioactivity detection section provided with a scintillator and a radioactivity measuring section provided with a photomultiplier are provided as independent components and connected together using a wavelength conversion optical fiber cable.

US 5856673 A describes that in a depth dose measuring apparatus, a fluorescent substance block bundling scintillation fibers of which radiation absorption characteristic is close to that of tissue, is disposed orthogonally to the incident direction of radiation. The fluorescence intensity distribution on the fiber end faces of the fluorescent substance block is measured by an image measuring device.

WO 2016 091610 A1 describes an apparatus for measuring the weighted computed tomography air kerma index (CTDIw) and/or the volume computed tomography air kerma index (CTDIv) comprising a bare phantom with a central housing, and a whole number p greater than or equal to 4 of peripheral housings or a single continuous annular peripheral housing, the peripheral housing or housings being located in the vicinity of and beneath a first external envelope surface.

WO 2016 093074 A1 describes a radiation monitor provided with a radiation light emitting element having a light emitting part that emits light of an intensity corresponding to the dose rate of incident radiation, an optical fiber that is connected to the radiation light emitting element and that transmits light emitted from the light emitting part, an electrical pulse converter that is connected to the optical fiber and that transmits one electrical pulse for every photon of the transmitted light, and an electrical pulse detector that is connected to the electrical pulse converter and that counts the electrical pulses transmitted from the electrical pulse converter.

### Citation List

### Patent Literature

Patent Literature 1: Japanese Unexamined Patent Application Publication No. 1993-232234

### Summary of Invention

### Technical Problem

However, according to the technique disclosed in the patent literature 1, as plural semiconductor detectors are provided as the detector of a radiation, the technique has a problem that the radiation monitor is large-sized. Moreover, as measurement results of a dose rate are apt to have dispersion depending upon energy of a radiation in the configuration provided with the semiconductor detectors, further higher precision is desired.

Then, the present invention has it as an object to provide a radiation monitor that can detect a radiation with high precision.

### Solution to Problem

To achieve the object, a radiation monitor according to claim 1 is provided.

### Advantageous Effects of Invention

According to the present invention, the radiation monitor that can detect a radiation with high precision can be provided.

### Brief Description of Drawings

Fig. 1 is a block diagram showing a radiation monitor equivalent to a first embodiment of the present invention.
Fig. 2 illustrates a process for generating a photon with a radiation incident on a radioluminescence device in the radiation monitor equivalent to the first embodiment of the present invention.
Fig. 3A is a perspective view showing the radioluminescence device and optical fibers respectively provided to the radiation monitor equivalent to the first embodiment of the present invention.
Fig. 3B is a sectional view viewed along a line II-II in Fig. 3A.
Fig. 4 is a characteristic diagram showing a counting rate of photons based upon energy before correction.
Fig. 5 illustrates dependency upon energy of sensitivity in the central optical fiber and the optical fibers in the vicinity of a circumference in the radiation monitor equivalent to the first embodiment of the present invention.
Fig. 6 is a functional block diagram including an arithmetic unit in the radiation monitor equivalent to the first embodiment of the present invention.
Fig. 7 is a flowchart showing a process executed by the arithmetic unit in the radiation monitor equivalent to the first embodiment of the present invention.
Fig. 8 illustrates sensitivity ratio-energy information stored in a storage in the radiation monitor equivalent to the first embodiment of the present invention.
Fig. 9 illustrates energy-correction factor information stored in the storage in the radiation monitor equivalent to the first embodiment of the present invention.
Fig. 10 illustrates counting rate-dosage rate information stored in the storage in the radiation monitor equivalent to the first embodiment of the present invention.
Fig. 11 is a block diagram showing a radiation monitor equivalent to a second embodiment of the present invention.
Fig. 12 is a block diagram showing a radiation monitor equivalent to a third embodiment of the present invention.
Fig. 13 illustrates connected positions of optical fibers in a radiation monitor equivalent to a fourth embodiment of the present invention.
Fig. 14 is a block diagram showing a radiation monitor equivalent to a fifth embodiment of the present invention.
Fig. 15 is a block diagram showing a radiation monitor equivalent to a sixth embodiment of the present invention.
Fig. 16A is a perspective view showing a radioluminescence device and optical fibers respectively provided to a radiation monitor equivalent to a seventh embodiment of the present invention.
Fig. 16B is a sectional view viewed along a line III-III in Fig. 16A.
Fig. 17 is a sectional view showing a radioluminescence device and optical fibers respectively provided to a radiation monitor in a variation of the present invention.

### Description of Embodiments

### First Embodiment

### <Configuration of radiation monitor>

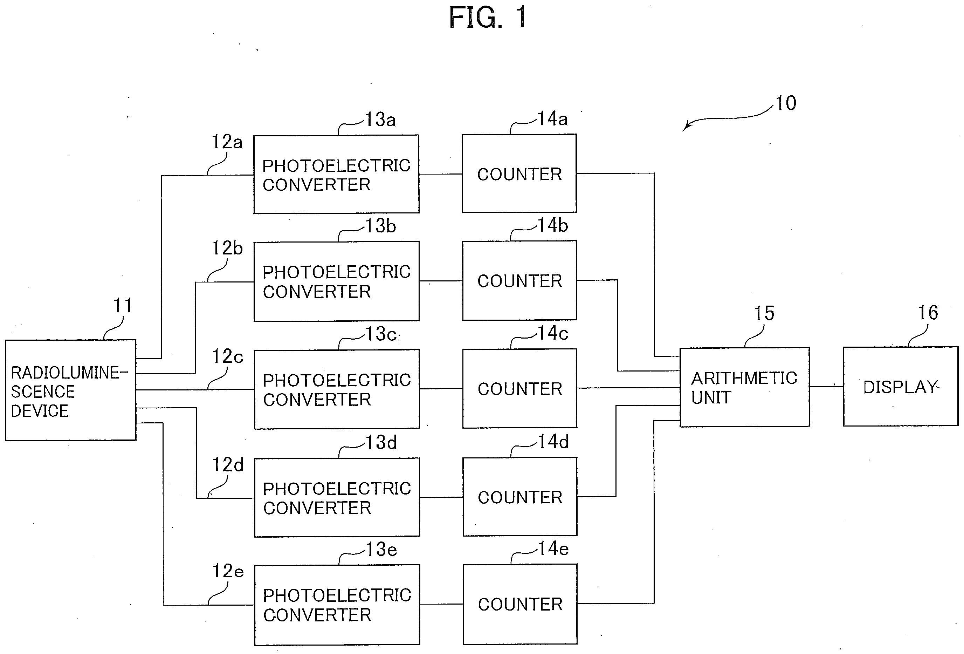

Fig. 1 is a block diagram showing a radiation monitor 10 equivalent to a first embodiment.

The radiation monitor 10 is equipment that detects a radiation. As shown in Fig. 1, the radiation monitor 10 is provided with a radioluminescence device 11, optical fibers 12a to 12e, photoelectric converters 13a to 13e, counters 14a to 14e, an arithmetic unit 15, and a display 16.

The radioluminescence device 11 generates a photon with a radiation incident on the device. That is, the radioluminescence device 11 has a property of emitting light having intensity depending upon a radiation dose. For such a radioluminescence device 11, a scintillator including a rare earth element in addition to yttrium aluminum garnet (YAG) being base material, for example, can be used.

Moreover, as the radioluminescence device one or more of Ytterbium, neodymium, cerium, and praseodymium for the above-mentioned rare earth element. As described above, as the radioluminescence device 11 includes at least one type of rare earth element can be used, a dosage rate of a radiation incident on the radioluminescence device 11 and intensity of light emitted from the radioluminescence device 11 (that is, the number of photons generated per unit time) have linear relation. Accordingly, the dosage rate of a radiation can be measured with high precision by counting photons generated in the radioluminescence device 11.

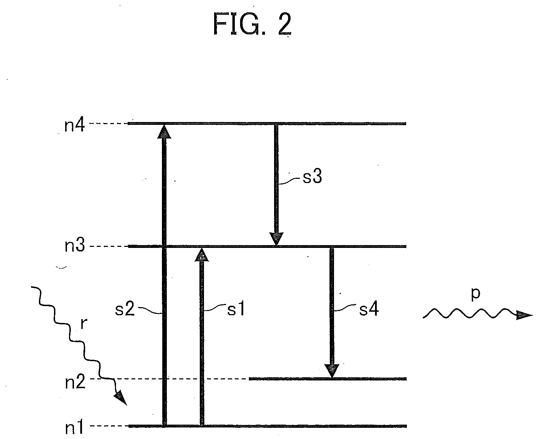

Fig. 2 illustrates a process for generating a photon with a radiation incident on the radioluminescence device 11.

In the example shown in Fig. 2, when a radiation r is incident on the radioluminescence device 11 (see Fig. 1), electrons in a ground state (at an energy level n1) transit to an excited state of higher energy (at energy levels n3, n4) by energy of the radiation r as shown by arrows s1, s2.

Electrons in the excited state at the energy level n4 radiationlessly transit to the excited state at the lower energy level n3 as shown by an arrow s3. When the electrons at the energy level n3 radiatively transit to an excited state at a further lower energy level n2 as shown by an arrow s4, a photon p of energy equivalent to difference (n3 - n2) is generated.

Moreover, the radioluminescence device 11 shown in Fig. 1 is housed in a housing not shown. This housing is provided with a function for transmitting a radiation incident from the outside and interrupting light incident from the outside. Accordingly, in detecting a radiation, the radioluminescence device is seldom influenced by light from the outside.

As shown in Fig. 1, the five optical fibers 12a to 12e are connected to the radioluminescence device 11. The optical fiber 12a is an optical transmission line that transmits a photon generated in the radioluminescence device 11 to the photoelectric converter 13a. Similarly, the optical fibers 12b to 12e are connected to the photoelectric converters 13b to 13e in one-to-one correspondence. For materials of the optical fibers 12a to 12e, quartz and plastic, for example, can be used.

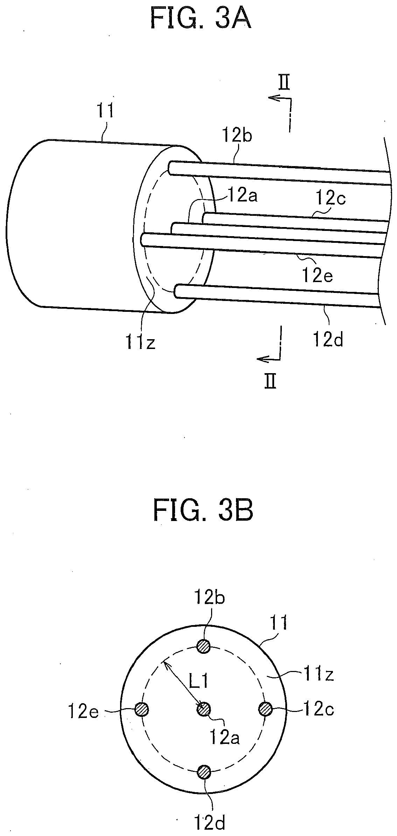

Fig. 3A is a perspective view showing the radioluminescence device 11 and the optical fibers 12a to 12e and Fig. 3B is a sectional view viewed along a line II-II in Fig. 3A.

In the example shown in Fig. 3A, the radioluminescence device 11 is cylindrical and the five optical fibers 12a to 12e are connected to an end face 11z of the radioluminescence device. One end of the optical fiber 12a is connected to the center of the end face 11z and the other end is connected to the photoelectric converter 13a (see Fig. 1) . Hereinafter, the optical fiber 12a connected to the center of the radioluminescence device 11 is called the central optical fiber.

Moreover, one ends of the optical fibers 12b to 12e are connected to the vicinity of a circumference of the end face 11z and the other ends are connected to the photoelectric converters 13b to 13e (see Fig. 1) in one-to-one correspondence. Hereinafter, the optical fibers 12b to 12e respectively connected to the vicinity of the circumference of the radioluminescence device 11 are called the optical fibers in the vicinity of the circumference. As described above, the optical fiber 12a is different from the other optical fibers 12b to 12e in distance between the center of the end face 11z and connected positions of the optical fibers on the end face 11z. The optical fibers in the vicinity of the circumference 12b to 12e are arranged at a circumferential equal interval on the circumference apart by a radius L1 from the center of the end face 11z as shown in Fig. 3B.

Next, relation between energy of a radiation incident on the radioluminescence device 11 and a counting rate (the number of photons per unit time) of photons transmitted via the optical fibers 12a to 12e will be described.

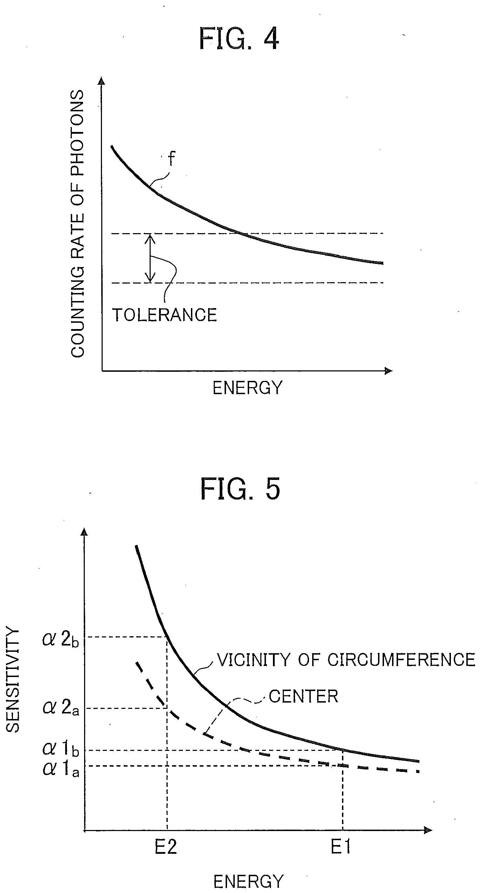

Fig. 4 is a characteristic diagram showing a counting rate of photons before correction based upon energy.

An axis of an abscissa in Fig. 4 shows energy of a radiation incident on the radioluminescence device 11. An axis of an ordinate in Fig. 4 shows a counting rate of photons transmitted via the central optical fiber 12a (see Fig. 3B).

A curve f shown in Fig. 4 is created by plotting plural points showing variation of the energy of the radiation, maintaining a dosage rate of the radiation at a predetermined value.

A case that as the energy of the radiation decreases, the counting rate of photons incident on the central optical fiber 12a increases (that is, sensitivity to the radiation increases) as shown in Fig. 4 will be described for example below.

Tolerance of the counting rate shown in Fig. 4 is a predetermined range including the most appropriate counting rates corresponding to actual dosage rates of the radiation and the tolerance is preset. The tolerance is kept in the range in which an error in the dosage rate is relatively small by calculating a dosage rate on the basis of the counting rates in the tolerance.

However, even if the dosage rate of the radiation is fixed, the number of photons generated per unit time in the radioluminescence device 11 varies depending upon energy of the radiation. If the dosage rate of the radiation is measured using only the central optical fiber 12a, results of the measurement may be greatly higher than real dosage rates especially in a range of low energy. Then, in this embodiment, precision in measuring the dosage rate is enhanced by instructing the arithmetic unit 15 (see Fig. 1) to calculate the dosage rate of the radiation on the basis of the counting rate of photons in each of the five optical fibers 12a to 12e. A procedure for calculating the dosage rate will be described later.

Fig. 5 illustrates dependency upon energy of sensitivity in the central optical fiber 12a and the optical fibers 12b to 12e in the vicinity of the circumference.

An axis of an abscissa in Fig. 5 shows energy of a radiation incident on the radioluminescence device 11. An axis of an ordinate in Fig. 5 shows sensitivity to the radiation in the optical fibers 12a to 12e (see Fig. 3B) . The sensitivity is proportional to counting rates of photons incident on the optical fibers 12a to 12e per unit time.

A broken line in Fig. 5 shows the sensitivity to the radiation in the central optical fiber 12a (see Fig. 3B). A full line in Fig. 5 shows the sensitivity to the radiation in each of the optical fibers 12b to 12e in the vicinity of the circumference (see Fig. 3B).

As shown in Fig. 5, in both the center and the vicinity of the circumference of the radioluminescence device 11, as the energy of the radiation decreases, the sensitivity to the radiation increases. This reason is that as described above, as the energy of the radiation decreases, the counting rate of photons generated in the the radioluminescence device 11 increases (see Fig. 4).

Moreover, as shown in Fig. 5, at arbitrary energy, the sensitivity in the central optical fiber 12a is lower than the sensitivity in the optical fibers 12b to 12e in the vicinity of the circumference. This reason is that when radiative transition of electrons occurs in the vicinity of a circumferential wall surface of the cylindrical radioluminescence device 11 (see Fig. 3A) and energy of the radiation is exhausted, the radiation does not reach the vicinity of the center of the radioluminescence device 11. Such a trend becomes remarkable as energy of the radiation decreases as shown in Fig. 5.

For example, at relatively high energy E1, sensitivity ratio (α1_{b}/α1ₐ) of the vicinity of the circumference to the center has a small value. In the meantime, at relatively low energy E2, sensitivity ratio (α2_{b}/α2ₐ) has a large value. In this embodiment, the arithmetic unit 15 (see Fig. 1) calculates energy of the radiation on the basis of such sensitivity ratio. The arithmetic unit 15 corrects the counting rate of photons in the central optical fiber 12a on the basis of the energy of the radiation (that is, the arithmetic unit settles the counting rate of photons in the tolerance shown in Fig. 4).

Referring to Fig. 1 again, the description will be continued.

The photoelectric converter 13a converts a photon transmitted via the optical fiber 12a to an electrical pulse. To explain more detailedly, when one photon is incident on the photoelectric converter 13a, one electrical pulse is transmitted by photoelectric conversion. For such the photoelectric converter 13a, a photomultiplier and an avalanche photodiode can be used, for example. The other photoelectric converters 13b to 13e are also similar. As described above, the photoelectric converters 13a to 13e are provided with a function for converting a photon transmitted via each optical fiber 12a to 12e to an electrical pulse every optical fiber 12a to 12e.

The counter 14a is a device that counts electrical pulses input from the photoelectric converter 13a and is connected to the photoelectric converter 13a. Similarly, the counters 14b to 14e are connected to the photoelectric converters 13b to 13e in one-to-one correspondence. These counters 14a to 14e include electronic circuits such as a central processing unit (CPU), a read only memory (ROM), a random access memory (RAM) and various interfaces though the electronic circuits are not shown. The CPU executes various processing by reading a program stored in the ROM and storing the program in the RAM.

The arithmetic unit 15 at least operates the dosage rate of the radiation incident on the radioluminescence device 11 on the basis of counting rates of electrical pulses (the number of electrical pulses per unit time) input from the respective counters 14a to 14e. As shown in Fig. 1, the arithmetic unit 15 is connected to the counters 14a to 14e. The arithmetic unit 15 includes electronic circuits such as CPU, ROM, RAM and various interfaces though the electronic circuits are not shown, and the CPU in the arithmetic unit executes various processing by reading a program stored in the ROM and storing the program in the RAM.

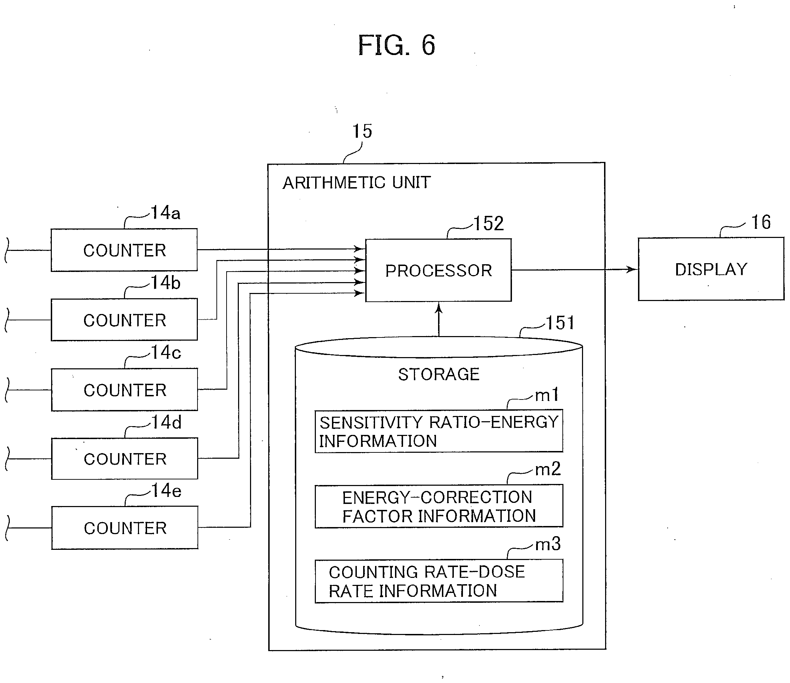

Fig. 6 is a functional block diagram including the arithmetic unit 15 of the radiation monitor 10.

As shown in Fig. 6, the arithmetic unit 15 is provided with a storage 151 and a processor 152. The storage 151 includes sensitivity ratio-energy information m1, energy-correction factor information m2 and counting rate-dosage rate information m3. The above-mentioned each information will be described later.

The processor 152 calculates the dosage rate and others of the radiation on the basis of values input from the counters 14a to 14e and each information stored in the storage 151 and outputs a result of the calculation to the display 16. Processing executed by the processor 152 will be described later.

The display 16 is a display for example and is connected to the arithmetic unit 15. The display 16 is provided with a function for displaying a result of operation by the processor 152 and displaying whether the radiation monitor 10 is normal or not.

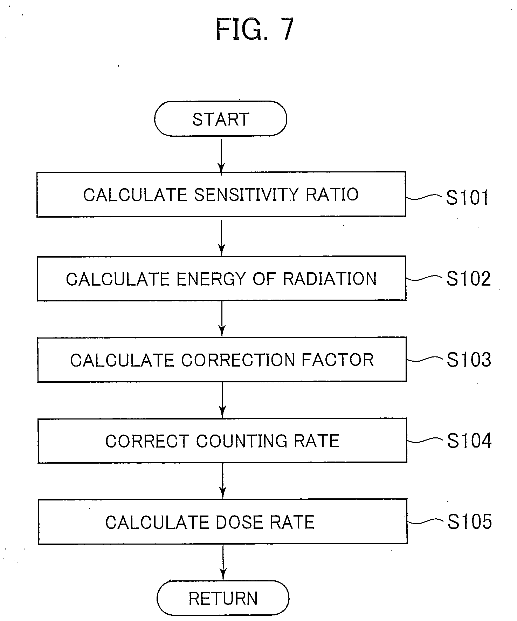

Fig. 7 is a flowchart showing a process executed by the processor 152 (if necessary, see Fig. 3B).

In a step S101, the processor 152 calculates the sensitivity ratio of the optical fibers in the vicinity of the circumference 12b to 12e to the central optical fiber 12a. To explain processing in the step S101 in the concrete, the processor 152 first reads the counting rate of photons transmitted via the central optical fiber 12a on the basis of data from the counter 14a (see Fig. 1) . The counting rate is called a counting rate of the center.

Moreover, the processor 152 calculates a mean value of the counting rates of photons transmitted via the optical fibers in the vicinity of the circumference 12b to 12e on the basis of data from the counters 14b to 14e. The mean value is called a counting rate of the vicinity of the circumference.

As described above, the sensitivity related to the radiation of the central optical fiber 12a and the counting rate of photons transmitted via the optical fiber 12a are proportional. As for the optical fibers in the vicinity of the circumference 12b to 12e, the above-mentioned is also similar. Accordingly, in the step S101, the processor 152 calculates sensitivity ratio of the vicinity of the circumference to the center by dividing the counting rate of the vicinity of the circumference (that is, the sensitivity of the vicinity of the circumference) by the counting rate of the center (that is, the sensitivity of the center).

In a step S102, the processor 152 calculates energy of the radiation. That is, the processor 152 calculates energy of the radiation incident on the radioluminescence device 11 on the basis of the sensitivity ratio as a result of the calculation in the step S101 and the sensitivity ratio-energy information m1 (see Fig. 6) stored in the storage 151.

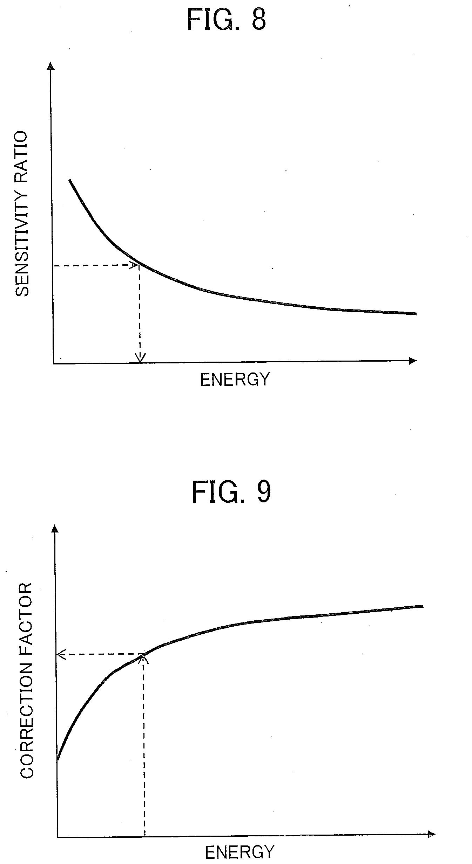

Fig. 8 illustrates the sensitivity ratio-energy information m1 stored in the storage 151.

An axis of an abscissa in Fig. 8 shows energy of the radiation incident on the radioluminescence device 11. An axis of an ordinate in Fig. 8 shows the sensitivity ratio as the result of the calculation in the step S101.

As shown in Fig. 8, as energy of the radiation decreases, sensitivity ratio of the vicinity of the circumference to the center increases . As described above, as the energy of the radiation decreases, the trend that the sensitivity to the radiation of the vicinity of the circumference increases, compared with that of the center of the radioluminescence device 11 is remarkable (see Fig. 5). Sensitivity ratio-energy information m1 shown in Fig. 8 is stored in the storage 151 beforehand (see Fig. 6) as a data table or a mathematical expression.

In the step S102 shown in Fig. 7, the processor 152 calculates energy corresponding to the sensitivity ratio calculated in the step S101 referring to the sensitivity ratio-energy information m1. That is, the processor 152 calculates energy of the radiation on the basis of the sensitivity ratio which is ratio of the counting rate of the center and the counting rate of the vicinity of the circumference.

In the step S103, the processor 152 calculates a correction factor. The correction factor means a factor multiplied for the counting rate of the center. Hereby, the counting rate after correction of the center can be kept in the above-mentioned tolerance (see Fig. 4).

Fig. 9 illustrates the energy-correction factor information m2 stored in the storage 151.

An axis of an abscissa in Fig. 9 shows energy of the radiation incident on the radioluminescence device 11. An axis of an ordinate in Fig. 9 shows the correction factor to be multiplied by the counting rate of the center.

In the example shown in Fig. 9, as energy of the radiation decreases, the correction factor becomes smaller. This reason is that as the energy of the radiation decreases, the counting rate before correction in the center increases as described above and according to circumstances, the counting rate exceeds the predetermined tolerance (see Fig. 4). The above-mentioned energy-correction factor information m2 is stored in the storage 151 (see Fig. 6) beforehand as a data table or a mathematical expression.

In the step S104 shown in Fig. 7, the processor 152 corrects the counting rate of photons. That is, the processor 152 corrects the counting rate in the center by multiplying the counting rate before correction in the center (the number of photons transmitted via the optical fiber 12a shown in Fig. 3B per unit time) by the correction factor calculated in the step S103. Hereby, even if energy of the radiation is relatively low, the counting rate of photons can be kept in the predetermined tolerance (see Fig. 4) and in addition, the dosage rate can be measured with high precision.

In the step S105, the processor 152 calculates a dosage rate of the radiation. That is, the processor 152 calculates a dosage rate of the radiation incident on the radioluminescence device 11 on the basis of the counting rate as a result of the calculation in the step S104 and the counting rate-dosage rate information m3 (see Fig. 6) stored in the storage 151.

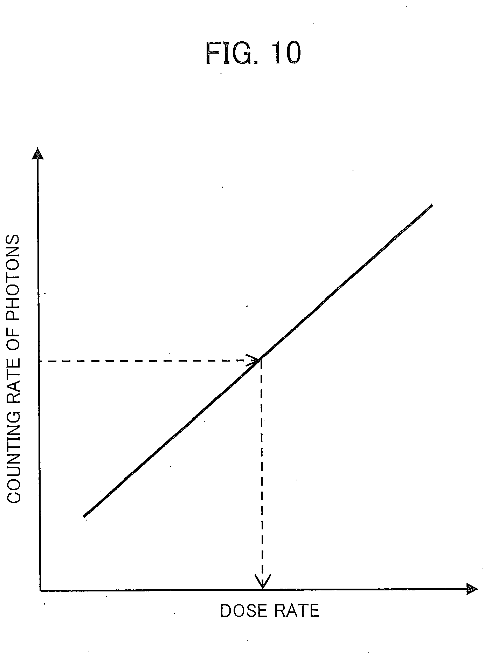

Fig. 10 illustrates the counting rate-dosage rate information m3 stored in the storage 151.

An axis of an abscissa in Fig. 10 shows a dosage rate of the radiation. An axis of an ordinate in Fig. 10 shows a counting rate in the center after the correction by the processing in the step S104.

As shown in Fig. 10, the counting rate of photons (the counting rate in the center after correction) and the dosage rate of the radiation are linearly related in one-to-one correspondence. Such the counting rate-dosage rate information m3 is stored in the storage 151 (see Fig. 6) beforehand as a data table or a mathematical expression.

In the step S105 shown in Fig. 7, the processor 152 calculates a dosage rate corresponding to the counting rate calculated in the step S104 referring to the above-mentioned counting rate-dosage rate information m3. Though the following step is omitted in Fig. 7, the dosage rate of the radiation as a result of the calculation by the processor 152 and a value of energy are displayed on the display 16 (see Fig. 1).

The process in the steps S101 to S105 shown in Fig. 7 is repeated (RETURN) at a predetermined cycle.

### <Effect>

According to the first embodiment, the arithmetic unit 15 calculates energy of the radiation on the basis of the ratio (the sensitivity ratio) of the counting rate in the center of the radioluminescence device 11 and the counting rate in the vicinity of the circumference (S101, S102 (see Fig. 7)) and corrects the counting rate in the center on the basis of the energy (S103, S104). Hereby, the dosage rate of the radiation can be detected with high precision (S105) .

Moreover, according to the first embodiment, as the scintillator is used for the radioluminescence device 11, high voltage is not required to be applied to the radioluminescence device 11 as in the related art using an ion chamber and a semiconductor detector. Accordingly, there is no possibility that hydrogen explosion and others are caused even under an atmosphere of hydrogen and oxygen, and no electric noise is caused. Further, it is also relatively ready to miniaturize the radioluminescence device 11 because the density of the scintillator is enhanced. Photons generated in such the radioluminescence device 11 are transmitted to the photoelectric converters 13a to 13e via the optical fibers 12a to 12e a few hundred m, for example, long. Accordingly, a radiation can be also readily detected under environment of a high dosage rate and under environment of high temperature such as a few hundred degrees C in addition to a narrow portion of an atomic power plant. Furthermore, an internal dosage rate can be also measured with high precision in a medical site for example. As described above, according to the first embodiment, the reliable high-precision radiation monitor 10 can be provided.

Furthermore, a type of a radiation source can be also specified on the basis of energy of a radiation. Accordingly, the radiation monitor 10 can be also applied to correspondence to an atomic power plant in an emergency and work such as decontamination for example.

### Second Embodiment

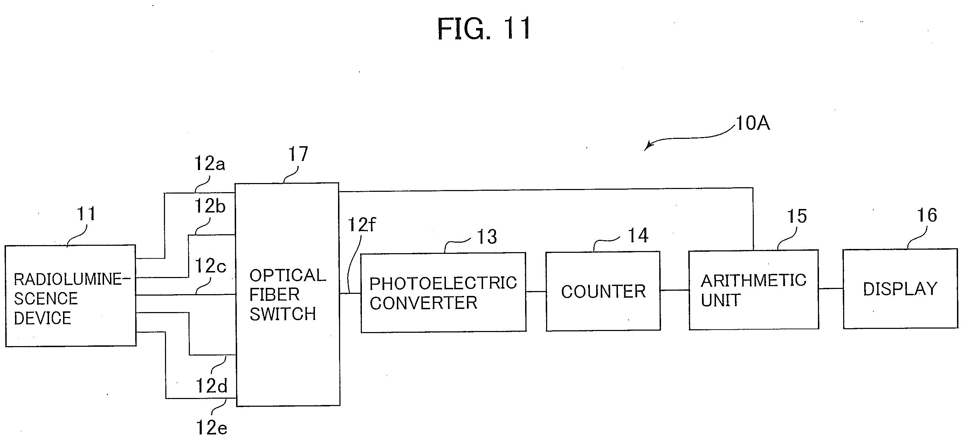

A second embodiment is different from the first embodiment in that a radiation monitor 10A (see Fig. 11) is provided with an optical fiber switch 17. Moreover, the second embodiment is different from the first embodiment in that the radiation monitor 10A is provided with one photoelectric converter 13 and one counter 14. The other configuration (connected positions of optical fibers 12a to 12e, the configuration and processing of an arithmetic unit 15 and others) is similar to that in the first embodiment. Accordingly, description of duplicate parts is omitted and parts different from those in the first embodiment will be described below.

Fig. 11 is a block diagram showing the radiation monitor 10A equivalent to the second embodiment.

As shown in Fig. 11, the radiation monitor 10A is provided with a radioluminescence device 11, the optical fibers 12a to 12f, the optical fiber switch 17, the photoelectric converter 13, the counter 14, the arithmetic unit 15 and a display 16.

The optical fiber switch 17 sequentially swiches the optical fiber that transmits a photon to the photoelectric converter 13 out of the five optical fibers 12a to 12e. The input side of the optical fiber switch 17 is connected to the radioluminescence device 11 via the optical fibers 12a to 12e and the output side is connected to the photoelectric converter 13 via the optical fiber 12f. For such the optical fiber switch 17, micro electromechanical systems (MEMS) that switch an optical path utilizing static electricity can be used, for example. Besides, for the optical fiber switch 17, a well-known mechanical optical switch and a waveguide type optical switch may be also used.

The photoelectric converter 13, the counter 14, the arithmetic unit 15 and the display 16 are sequentially connected to the back side of the optical fiber switch 17.

The arithmetic unit 15 is connected to the counter 14 and is also connected to the optical fiber switch 17. The arithmetic unit 15 stores identification information of the optical fiber connected to the photoelectric converter 13 via the optical fiber switch 17 out of the optical fibers 12a to 12e with the identification information correlated to a counting rate of photons transmitted via the optical fiber. The arithmetic unit 15 calculates a dosage rate of the radiation on the basis of the identification information of the optical fiber selected by the optical fiber switch 17 and a counting result by the counter 14.

As a procedure for calculating the dosage rate of the radiation by the arithmetic unit 15 is similar to that in the first embodiment (see Fig. 7), the description is omitted.

### <Effect>

According to the second embodiment, the one photoelectric converter 13 and the one counter 14 have only to be provided. Accordingly, a manufacturing cost of the radiation monitor 10A can be reduced, compared with the first embodiment.

### Third Embodiment

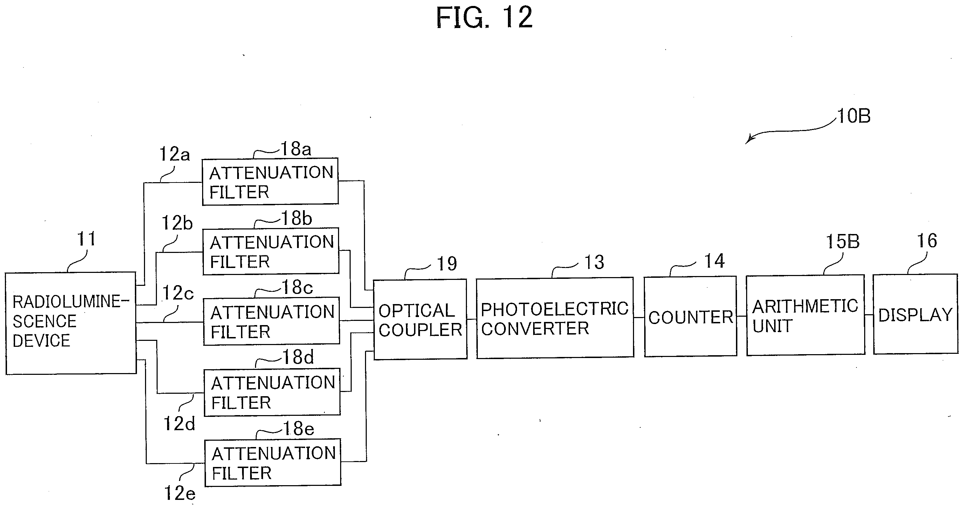

A third embodiment is different from the first embodiment in that a radiation monitor 10B (see Fig. 12) is provided with attenuation filters 18a to 18e and an optical coupler 19 and a counting rate is corrected using the attenuation filters 18a to 18e according to an analog method. Moreover, the third embodiment is different from the first embodiment in that the sensitivity ratio-energy information m1 (see Fig. 6) and the energy-correction factor information m2 (see Fig. 6) respectively described in the first embodiment are not required to be stored in an arithmetic unit 15B.

Connected positions of optical fibers 12a to 12e and functions of a photoelectric converter 13, a counter 14 and a display 16 are similar to those in the first embodiment. Accordingly, description of duplicate parts is omitted and parts different from those in the first embodiment will be described below.

Fig. 12 is a block diagram showing the radiation monitor 10B equivalent to the third embodiment.

As shown in Fig. 12, the radiation monitor 10B is provided with a radioluminescence device 11, the attenuation filters 18a to 18e, the optical coupler 19, the photoelectric converter 13, the counter 14, the arithmetic unit 15B and the display 16.

The attenuation filter 18a is a filter for attenuating light incident on itself from the radioluminescence device 11 via the optical fiber 12a. For such the attenuation filter 18a, a neutral density (ND) filter can be used, for example. The light attenuated by the attenuation filter 18a is conducted to the optical coupler 19. Similarly, front sides of the other attenuation filters 18b to 18e are connected to the optical fibers 12b to 12e in one-to-one correspondence and back sides are connected to the optical coupler 19.

Moreover, attenuation factors of the attenuation filters 18a to 18e are preset on the basis of the dependency upon energy shown in Fig. 5 of the sensitivity of the optical fibers 12a to 12e. To explain in the concrete, sensitivity of the optical fiber 12a connected to the center of an end face 11z (see Fig. 3B) of the radioluminescence device 11 is lower than that of the vicinity of a circumference as described in the first embodiment (see Fig. 5) . Accordingly, for the attenuation filter 18a connected to the optical fiber 12a, the one having a relatively low attenuation factor is used.

In the meantime, the optical fibers 12b to 12e connected to the vicinity of the circumference of the end face 11z (see Fig. 3B) of the radioluminescence device 11 have high sensitivity, compared with the central optical fiber (see Fig. 5) . Accordingly, for the attenuation filters 18b to 18e connected to these optical fibers 12b to 12e, the ones having a relatively high attenuation factor are used. That is, the longer distance between the center of the end face 11z (see Fig. 3B) of the radioluminescence device 11 and connected positions on the end face 11z of the optical fibers 12a to 12e is, the higher the attenuation factors of the attenuation filters for attenuating light corresponding to the distance from the optical fibers are. Magnitude relation among the above-mentioned attenuation factors is one example and the present invention is not limited to this relation.

The optical coupler 19 shown in Fig. 12 merges photons transmitted via the attenuation filters 18b to 18e. The photons merged in the optical coupler 19 are conducted to the photoelectric converter 13. A counting rate (that is, a counting rate of photons) of electrical pulses transmitted by the photoelectric converter 13 is calculated by the counter 14 and a calculation result is output to the arithmetic unit 15. As described above, as the attenuation factors of the attenuation filters 18b to 18e are appropriately set, the counting rate of photons as the calculation result by the counter 14 is kept in predetermined tolerance (see Fig. 4).

In the arithmetic unit 15B, the counting rate-dosage rate information m3 (see Figs. 6, 10) described in the first embodiment is stored beforehand. The arithmetic unit 15B calculates a dosage rate of a radiation on the basis of the counting rate input from the counter 14 referring to the counting rate-dosage rate information m3.

### <Effect>

According to the third embodiment, as only one photoelectric converter 13 and only one counter 14 are provided, a cost of the radiation monitor 10B can be reduced, compared with the cost in the first embodiment. Moreover, as the counting rate based upon energy of the radiation can be corrected using the attenuation filters 18b to 18e according to an analog method, processing of the arithmetic unit 15B can be simplified, compared with the processing in the first embodiment.

### Fourth Embodiment

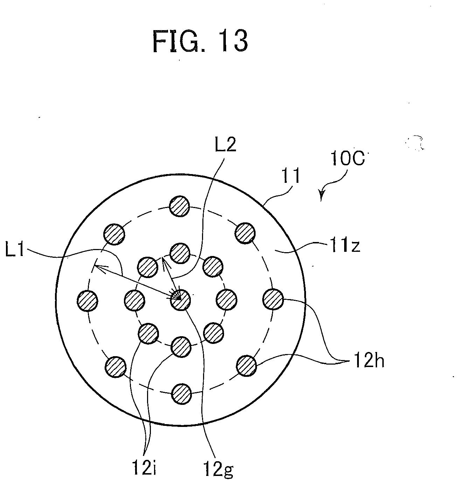

A fourth embodiment is different from the first embodiment in that eight optical fibers 12h are connected to the vicinity of a circumference on an end face 11z of a radioluminescence device 11 (see Fig. 13) . Moreover, the fourth embodiment is different from the first embodiment in that eight optical fibers 12i are also connected in an intermediate portion between the center and the vicinity of a circumference in a radial direction of a circular end face 11z (see Fig. 13) . The whole configuration of a radiation monitor 10C is similar to the configuration (see Fig. 1) in the first embodiment. Accordingly, description of duplicate parts is omitted and parts different from those in the first embodiment will be described below.

Fig. 13 illustrates connected positions of optical fibers 12g, 12h, 12i in the radiation monitor 10C equivalent to the fourth embodiment. As in Fig. 3B referred in the first embodiment, Fig. 13 shows cross sections of the optical fibers 12g, 12h, 12i connected to the end face 11z of the cylindrical radioluminescence device 11.

As shown in Fig. 13, the radioluminescence device 10C is provided with the central optical fiber 12g, the eight optical fibers in the vicinity of the circumference 12h, and the intermediate eight optical fibers 12i as the plural optical fibers.

The intermediate optical fibers 12i are connected between the central optical fiber 12g and the optical fibers in the vicinity of the circumference 12h (on a circumference apart by a radius L2 from the center: L2<L1) in the radial direction. Moreover, the intermediate optical fibers 12i are arranged at an equal interval in a circumferential direction.

An arithmetic unit 15 (see Fig. 1) reads a counting rate of photons transmitted via the central optical fiber 12g. Moreover, the arithmetic unit 15 calculates a mean value (called a counting rate in the vicinity of the circumference) of counting rates of photons transmitted via the optical fibers in the vicinity of the circumference 12h. Similarly, the arithmetic unit 15 calculates a mean value (called a counting rate in the intermediate portion) of counting rates of photons transmitted via the intermediate optical fibers 12i.

The arithmetic unit 15 calculates a dosage rate of a radiation on the basis of the counting rates in the center, the intermediate portion and vicinity of the circumference. Dependency upon energy of sensitivity to the radiation in the center, the intermediate portion and the vicinity of the circumference is mostly similar to that in Fig. 5 referred in the first embodiment (a curve in the intermediate portion is located between the curve of the center and the curve of the vicinity of the circumference) . In such a case, the arithmetic unit 15 calculates a dosage rate of the radiation on the basis of counting rates in the center and the vicinity of the circumference by the similar method to that in the first embodiment, for example.

The arithmetic unit 15 may also calculate a dosage rate of the radiation on the basis of counting rates in the center and the intermediate portion and may also calculate a dosage rate of the radiation on the basis of counting rates in the intermediate portion and the vicinity of the circumference.

Moreover, depending upon a characteristic of the radioluminescence device 11, the connected positions of the optical fibers 12g, 12h, 12i and others, a curve showing the dependency upon energy of sensitivity to the radiation may be not the monotonously decreasing curve shown in Fig. 5. For example, in a range in which energy of the radiation is equal to or exceeds a predetermined value Es (not shown) , the counting rate of the center may be fixed. In such a case, the arithmetic unit 15 calculates a dosage rate of the radiation on the basis of counting rates in the center and the vicinity of the circumference for example in a range in which energy of the radiation is below the predetermined value Es. Moreover, the arithmetic unit 15 calculates a dosage rate of the radiation on the basis of counting rates in the intermediate portion and the vicinity of the circumference, for example, in the range in which energy of the radiation is equal to or exceeds the predetermined value Es. As described above, the arithmetic unit 15 may also suitably select two used for calculating a dosage rate out of counting rates in the center, the intermediate portion and the vicinity of the circumference.

### <Effect>

According to the fourth embodiment, as described above, counting rates in the center, the intermediate portion and the vicinity of the circumference are suitably selected by the arithmetic unit 15 so as to calculate a dosage rate. Hereby, a dosage rate of the radiation can be measured with high precision in energy in a large range.

### Fifth Embodiment

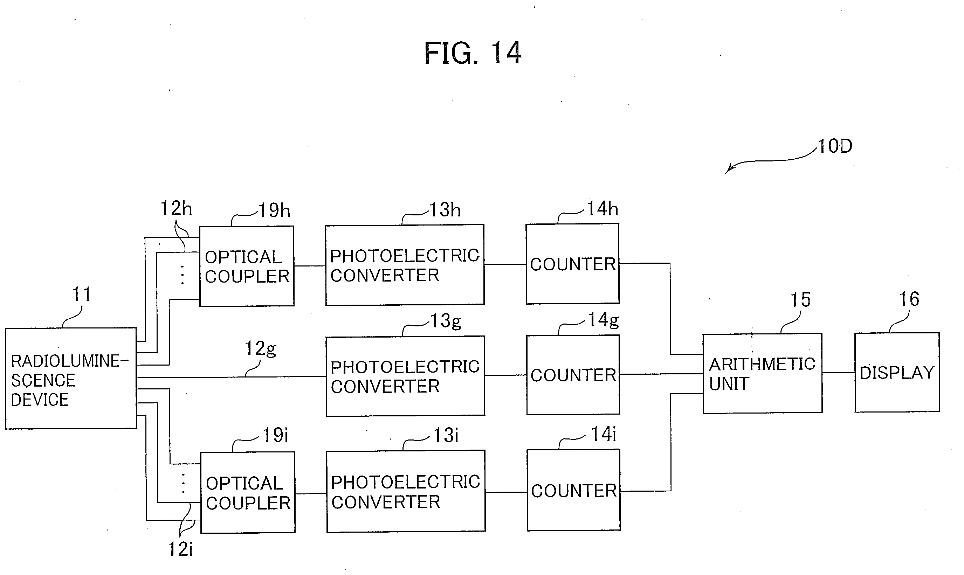

A fifth embodiment is different from the fourth embodiment in that a radiation monitor 10D (see Fig. 14) is provided with an optical coupler 19h that couples light transmitted via optical fibers 12h in the vicinity of a circumference and is provided with an optical coupler 19i that couples light transmitted via optical fibers 12i in an intermediate portion. The others (connected positions of optical fibers 12g, 12h, 12i, processing of an arithmetic unit 15 and others) are similar to those in the fourth embodiment. Accordingly, description of duplicate parts is omitted and parts different from those in the fourth embodiment will be described below.

Fig. 14 is a block diagram showing the radiation monitor 10D equivalent to the fifth embodiment.

As shown in Fig. 14, the radiation monitor 10D is provided with a radioluminescence device 11, the optical fibers 12g, 12h, 12i, the optical couplers 19h, 19i, photoelectric converters 13g, 13h, 13i, counters 14g, 14h, 14i, the arithmetic unit 15 and a display 16.

The optical coupler 19h merges photons transmitted via the optical fibers 12h in the vicinity of the circumference. The eight optical fibers 12h equal in distance L1 between the center of an end face 11z of the radioluminescence device 11 shown in Fig. 13 and the connected positions of the optical fibers on the end face 11z are connected to the optical coupler 19h.

The photoelectric converter 13h and the counter 14h are sequentially connected to the back side of the optical coupler 19h. As described above, the optical fibers in the vicinity of the circumference 12h have the similar energy characteristic (see Fig. 5) . Accordingly, photons transmitted via these optical fibers 12h are merged in the optical coupler 19h and are counted altogether.

The optical coupler 19i merges photons transmitted via the intermediate optical fibers 12i. The photoelectric converter 13i and the counter 14i are sequentially connected to the back side of the optical coupler 19i. As described above, the photoelectric converters 13h, 13i are connected to the optical couplers 19h, 19i in one-to-one correspondence.

Moreover, the photoelectric converter 13g and the counter 14g are sequentially connected to the central optical fiber 12g. As shown in Fig. 14, the counters 14g, 14h, 14i are connected to the photoelectric converters 13g, 13h, 13i in one-to-one correspondence.

As processing for calculating a dosage rate of a radiation by the arithmetic unit 15 on the basis of counting rates in the center, the intermediate portion and the vicinity of the circumference is similar to that in the fourth embodiment, the description is omitted.

### <Effect>

According to the fifth embodiment, the eight optical fibers in the vicinity of the circumference 12h having the similar energy characteristic are connected to the optical coupler 19h and besides, the intermediate eight optical fibers 12i are connected to the optical coupler 19i. Accordingly, the number of the photoelectric converters 13g, 13h, 13i and the counters 14g, 14h, 14i is small, compared with the fourth embodiment in which the photoelectric converters and the counters are respectively provided to each optical fiber. Hereby, a manufacturing cost of the radiation monitor 10D can be reduced.

Besides, the fifth embodiment has a configuration that the three counters 14g, 14h, 14i are connected to the arithmetic unit 15. Accordingly, compared with the fourth embodiment in which the arithmetic unit 15 is connected to counters (not show) of the same number as the number of the optical fibers, a load applied to the processing of the arithmetic unit 15 can be reduced.

### Sixth Embodiment

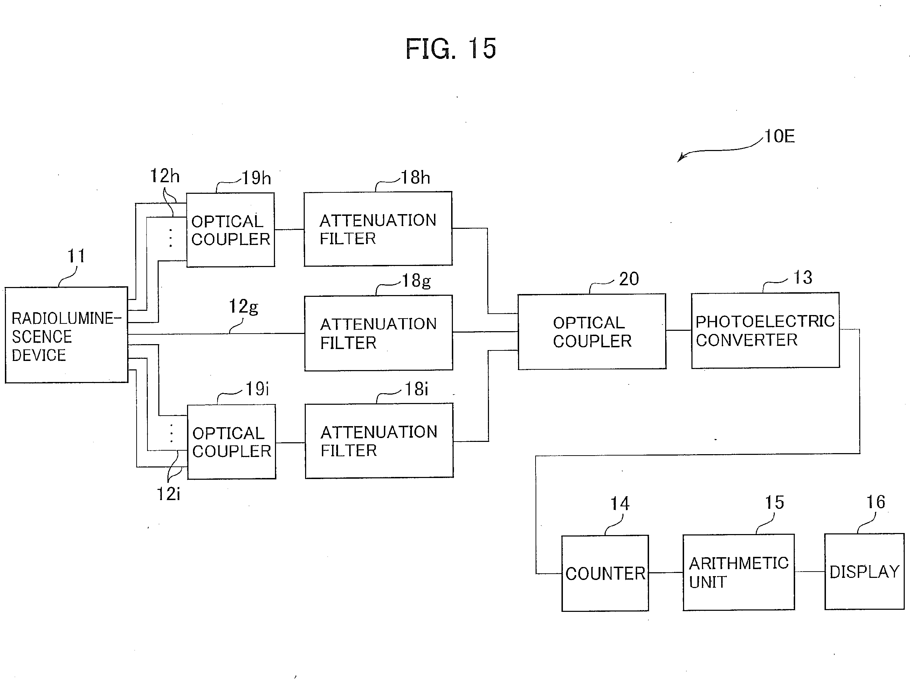

A sixth embodiment is different from the fourth embodiment in that a radiation monitor 10E (see Fig. 15) is provided with optical couplers 19h, 19i, 20 and attenuation filters 18g, 18h, 18i. Moreover, the sixth embodiment is different from the fourth embodiment in that counting rates are corrected using the attenuation filters 18g, 18h, 18i by an analog method. The other configuration such as connected positions of optical fibers 12g, 12h, 12i is similar to that in the fourth embodiment. Accordingly, description of duplicate parts is omitted and parts different from those in the fourth embodiment will be described below.

Fig. 15 is a block diagram showing the radiation monitor 10E equivalent to the sixth embodiment.

As shown in Fig. 15, the radiation monitor 10E is provided with a radioluminescence device 11, the optical couplers 19h, 19i, the attenuation filters 18g, 18h, 18i, the optical coupler 20, a photoelectric converter 13, a counter 14, an arithmetic unit 15 and a display 16.

The optical coupler 19h merges photons transmitted via the optical fibers 12h in the vicinity of a circumference. The eight optical fibers 12h equal in distance L1 between the center of an end face 11z of the radioluminescence device 11 shown in Fig. 13 and the connected positions of the optical fibers 12h on the end face 11z are connected to the optical coupler 19h. Photons merged in the optical coupler 19h are conducted to the attenuation filter 18h.

The optical coupler 19i merges photons transmitted via the intermediate optical fibers 12i. Photons merged in the optical coupler 19i are conducted to the attenuation filter 18i.

The attenuation filters 18h, 18i are a filter for attenuating light incident on each attenuation filter and are connected to respective back sides of the optical couplers 19h, 19i in one-to-one correspondence. The residual attenuation filter 18g is connected to the center of the radioluminescence device 11 via the optical fiber 12g.

Attenuation factors of the attenuation filters 18g, 18h, 18i are set on the basis of dependency upon energy of sensitivity of the optical fibers 12g, 12h, 12i as in the third embodiment. For example, the attenuation filter 18g connected to the central optical fiber 12g has the lowest attenuation factor. The reason is that a radiation is hard to be incident on the center in a radial direction of the radioluminescence device 11, compared with the vicinity of the circumference and the intermediate portion.

In the meantime, the reason is that the attenuation filter 18h connected to the optical fibers 12h in the vicinity of the circumference has the highest attenuation factor. The reason is that much radiation is incident on the vicinity of the circumference in the radial direction of the radioluminescence device 11. Magnitude relation among the above-mentioned attenuation factors is one example and the present invention is not limited to this relation.

The optical coupler 20 merges photons transmitted in the attenuation filters 18g, 18h, 18i. The photons merged in the optical coupler 20 are conducted to the photoelectric converter 13. The counter 14, the arithmetic unit 15 and the display 16 are sequentially connected to the back side of the photoelectric converter 13. As functions of the photoelectric converter 13, the counter 14, the arithmetic unit 15 and the display 16 are the same as those in the third embodiment, description is omitted.

### <Effect>

According to the sixth embodiment, the eight optical fibers 12h in the vicinity of the circumference having the similar energy characteristic are connected to the optical coupler 19h and besides, the intermediate eight optical fibers 12i are connected to the optical coupler 19i. Accordingly, the number of the attenuation filters 18g, 18h, 18i can be made smaller than the number in the third embodiment (see Fig. 12) and a manufacturing cost of the radioluminescence device 10E can be reduced.

### Seventh Embodiment

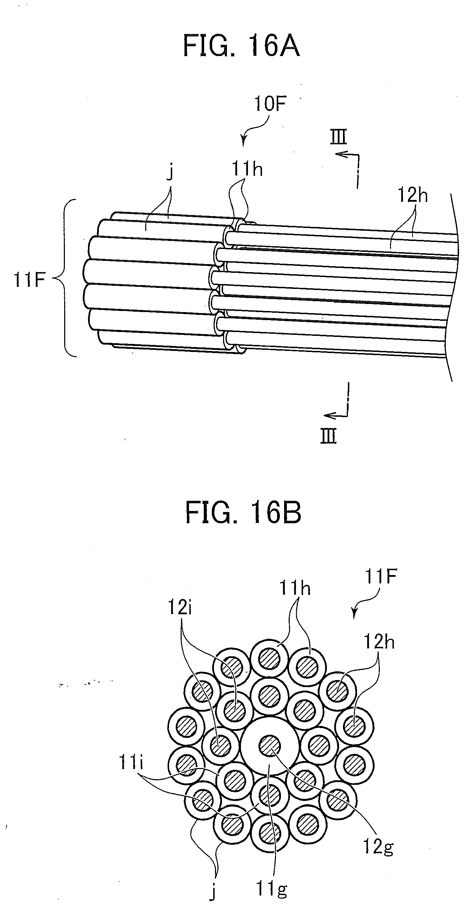

A seventh embodiment is different from the first embodiment in that a radiation monitor 10F (see Fig. 16A) is provided with plural radioluminescence elements 11g, 11h, 11i (see Fig. 16B) connected to optical fibers 12g, 12h, 12i (see Fig. 16B) in one-to-one correspondence. The others (the whole configuration of the radiation monitor 10F and processing of an arithmetic unit 15) are similar to those in the first embodiment. Accordingly, description of duplicate parts is omitted and parts different from those in the first embodiment will be described below.

Fig. 16A is a perspective view showing a radioluminescence device 11F and the optical fibers respectively provided to the radiation monitor 10F equivalent to the seventh embodiment and Fig. 16B is a sectional view viewed along a line III-III in Fig. 16A.

As shown in Figs. 16A and 16B, the radioluminescence device 11F has a configuration in which the slender and cylindrical radioluminescence elements 11g, 11h, 11i are bundled into one by resin or others. The central radioluminescence element 11g is connected to the optical fiber 12g in one-to-one correspondence. Similarly, the radioluminescence elements in the vicinity of a circumference and in an intermediate portion 11h, 11i respectively in a radial direction are connected to the optical fibers 12h, 12i in one-to-one correspondence.

Moreover, respective circumferential wall surfaces of the radioluminescence elements 11g, 11h, 11i are covered with shielding material j. Photons generated in the radioluminescence elements 11h in the vicinity of the circumference for example are incident on the optical fibers 12h connected to this radioluminescence elements 11h by configuring the radioluminescence device 11F as described above and the photons are hardly incident on the center and the intermediate portion. Similarly, a photon generated in the central radioluminescence element 11g is incident on the optical fiber 12g connected to this radioluminescence element 11g and the photon is not likely to incident on the vicinity of the circumference and the intermediate portion.

When light is incident at an incidence angle of a maximum acceptance angle θₘₐₓ defined by a numerical aperture of the optical fiber 12g or less, the light is transmitted via the optical fiber 12g. The above-mentioned maximum acceptance angle θₘₐₓ means a maximum incidence angle at which light is totally reflected inside the optical fiber 12g. Moreover, the numerical aperture means sinθₘₐₓ of the maximum acceptance angle θₘₐₓ. The other optical fibers 12h, 12i are also similar.

Accordingly, in the configuration (see Figs. 3A, 3B) of the first embodiment that the plural optical fibers 12a to 12e are connected to the integrated radioluminescence device 11, light generated in the vicinity of the circumference for example of the radioluminescence device 11 may be incident on the central optical fiber 12a. The light is transmitted, repeating total reflection inside the optical fiber 12a if an incidence angle when the light is incident on the central optical fiber 12a is the maximum acceptance angle θmax or less.

In the meantime, in the configuration of the seventh embodiment, as described above, photons generated in the vicinity of the circumference of the radioluminescence device 11F are not likely to be incident on the central optical fiber 12g. Accordingly, as difference in the radial direction in sensitivity to a radiation in the radioluminescence device 11F can be readily made, energy of the radiation can be precisely measured and in addition, a dosage rate of the radiation can be measured with high precision.

The configuration shown in Figs. 16A, 16B is included in the configuration that the shielding material j for shielding light is inserted into clearance between each of the radioluminescence elements 11g, 11h, 11i respectively different in distance between the center of an end face of the radioluminescence device 11F and each connected position of the optical fibers on the end face.

### <Effect>

According to the seventh embodiment, the radioluminescence device 11F is configured by bundling the slender and cylindrical radioluminescence elements 11g, 11h, 11i and further, the circumferential wall surfaces of the respective radioluminescence elements 11g, 11h, 11i are covered with the shielding material j. Accordingly, the difference in the radial direction (see Fig. 5) in the sensitivity to the radiation in the radioluminescence device 11F can be readily made and the energy of the radiation can be precisely measured. Hereby, the dosage rate of the radiation can be measured with further higher precision than that in the first embodiment.

### <Variation>

Each embodiment of the radiation monitor 10 and others according to the present invention has been described, however, the present invention is not limited to the the above-mentioned description and various modifications are allowed.

The processor 152 corrects the counting rate of the vicinity of the circumference in place of the center of the radioluminescence device 11 and the counting rate of the radiation is also calculated on the basis of the corrected counting rate and the energy of the radiation. As described above, the processor 152 calculates the dosage rate of the radiation on the basis of the counting rates (the counting rates of the center and the vicinity of the circumference) used for calculating the sensitivity ratio (the ratio of the counting rates) and the energy of the radiation.

The counting rate may be also corrected by performing predetermined operation such as the sum and a mean of counting rates in both the center and the vicinity of the circumference of the radioluminescence device 11.

Morover, in the first embodiment, the processing for calculating the energy of the radiation on the basis of the sensitivity ratio (the ratio of counting rates in the center and the vicinity of the circumference) is described, however, the present invention is not limited to this. The energy of the radiation is calculated by predetermined operation such as difference between counting rates for example and a dosage rate of the radiation may be also calculated on the basis of the energy.

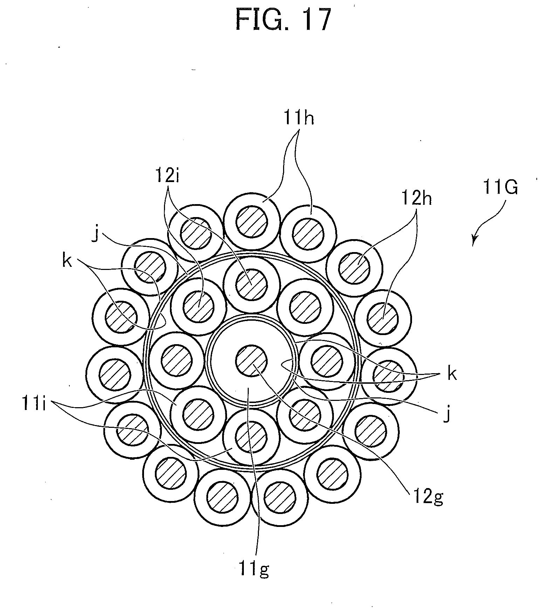

Moreover, in the seventh embodiment, the configuration that the shielding material j (see Fig. 16B) is wound onto the circumferential wall surfaces of the respective radioluminescence elements 11g, 11h, 11i is described, however, the present invention is not limited to this. That is, a radioluminescence device 11G (see Fig. 17) may be also configured as described in the following variation.

Fig. 17 is a sectional view showing the radioluminescence device 11G and optical fibers 12g, 12h, 12i respectively provided to a radiation monitor equivalent to the variation.

In the variation shown in Fig. 17, the radioluminescence device 11G is provided with cylindrical shielding material j that intervenes in clearance between a radioluminescence element 11g in the center in a radial direction and a radioluminescence element 11i in an intermediate portion and cylindrical reflectors k. The reflector k, the shielding material j and the reflector k are arranged in order toward the outside in the radial direction.

Similarly, the radioluminescence device 11G is provided with cylindrical shielding material j that intervenes in clearance between the radioluminescence element 11i in the intermediate portion in the radial direction and a radioluminescence element 11h in the vicinity of a circumference and cylindrical reflectors k. The reflector k, the shielding material j and the reflector k are arranged in order toward the outside in the radial direction. Crosstalk between each of the radioluminescence elements 11g, 11h, 11i can be inhibited by providing the shielding material j and the reflectors k as described above. Accordingly, as difference in dependency upon energy of sensitivity to a radiation can be readily made, the radiation can be measured with high precision. Moreover, leakage of light from the radioluminescence elements 11g, 11h, 11i is reduced, the sensitivity to the radiation can be enhanced.

Moreover, the shielding material j and one of the reflectors k may be also omitted from a configuration shown in Fig. 17 of the variation. That is, the variation may also have the configuration provided with the shielding material j that intervenes in the clearance between the radioluminescence elements different in distance between the center of the end face of the radioluminescence device 11G and each connected position of the optical fibers on the end face for shielding light and/or the reflector k that intervenes in the clearance between the radioluminescence elements different in the distance for reflecting light.

In addition, in the first to the sixth embodiments, the configurations that the radioluminescence devices 11 (see Figs. 3A, 3B) are cylindrical have been described, however, the present invention is not limited to these. That is, the radioluminescence device 11 may be also a rectangular parallelepiped and a pillar such as a polygonal pyramid. The respective radioluminescence elements 11g, 11h, 11i (see Fig. 16B) described in the seventh embodiment may be similarly also a rectangular parallelepiped and a pillar.

Further, a contour of the radioluminescence device 11 is not limited to the pillar. For example, the radioluminescence device 11 may be also spherical and polyhedral, and furthermore, may be also unsymmetrical. Contours of the radioluminescence elements 11g, 11h, 11i described in the seventh embodiment may be also similar. In such a configuration, plural optical fibers connected to the radioluminescence device 11 include optical fibers different in the distance between the center (or the center of gravity) of the radioluminescence device 11 and each corrected position of the optical fibers on the radioluminescence device 11. The configuration (the connected positions of the optical fibers) described in each embodiment is also included in the above-mentioned matters.

Furthermore, the radioluminescence device 11 may be also divided by forming an optical boundary in one radioluminescence device 11 using laser light for example. Hereby, a manufacturing cost of the radioluminescence device 11 can be reduced more than that in the seventh embodiment.

Furthermore, in each embodiment, the configuration separately including the counter 14 and the arithmetic unit 15 is described, however, a device that functions as both the counter 14 and the arithmetic unit 15 may be also provided.

Furthermore, in each embodiment, the case that the arithmetic unit 15 calculates a dosage rate every moment of the radiation is described, however, the present invention is not limited to this case. For example, the arithmetic unit 15 may also calculate a radiation dose on the basis of a dosage rate of the radiation.

Furthermore, in each embodiment, the configuration that the plural (four in the example shown in Fig. 3B) optical fibers are connected in the vicinity of the circumference and others in the radial direction of the radioluminescence device 11 is described, however, the present invention is not limited to this. For example, a configuration that one optical fiber is connected to the center of the radioluminescence device 11 and one optical fiber is connected to the vicinity of the circumference (a configuration that that is, the total two optical fibers are used) may be also adopted.

Furthermore, each embodiment can be suitably combined. For example, the radioluminescence device 11F is configured by combining the second embodiment and the seventh embodiment and bundling the plural radioluminescence elements 11g, 11h, 11i (see Fig. 16B) and further, the optical fiber switch 17 (see Fig. 11) may be also provided. In addition, the third, fifth or the sixth embodiment and the seventh embodiment may be also combined.

Furthermore, the first and fifth embodiments are combined and a configuration that one optical coupler 19h (see Fig. 14) connected to the optical fibers 12b to 12e (see Fig. 3B) in the vicinity of the circumference is provided may be also adopted. That is, the configuration provided with at least one optical coupler connected to the plural optical fibers equal in distance between the center of the end face 11z (see Fig. 3B) of the radioluminescence device 11 (see Fig. 3B) and each connected position of the optical fibers may be also adopted. A configuration acquired by combining the first embodiment (see Fig. 3B) and the sixth embodiment (see Fig. 15) is also similar.

Furthermore, each embodiment is detailedly described to plainly explain the present invention and the present invention is not necessarily limited to the embodiments provided with the above-mentioned whole configurations. A part of the configurations of the embodiments can be added, deleted and replaced to/from/with another configuration. In addition, the above-mentioned mechanisms and configurations are those thought necessary for explanation, and all mechanisms and configurations in a product are not necessarily described. The scope of the invention is defined by the appended claims.

### List of Reference Signs

10, 10A, 10B, 10C, 10D, 10E, 10F: Radiation monitor
11, 11F, 11G: Radioactive light emitting device
11g, 11h, 11i: Radioactive light emitting element
11z: End face
12a, 12b, 12c, 12d, 12e, 12g, 12h, 12i: Optical fiber
13, 13a, 13b, 13c, 13d, 13e, 13g, 13h, 13i: Photoelectric converter
14, 14a, 14b, 14c, 14d, 14e, 14g, 14h, 14i: Counter
15, 15B: Arithmetic unit
16: Display
17: Optical fiber switch
18a, 18b, 18c, 18d, 18e, 18g, 18h, 18i: Attenuation filter
19, 20: Optical coupler
19h, 19i: Optical coupler (another optical coupler)
L1, L2: Distance
j: Shielding material
k: Reflector

## Claims

1. A radiation monitor (10), comprising:
a radioluminescence device (11) that generates a photon with a radiation incident on the device itself;
a plurality of optical fibers (12a-e; 12h,i) connected to the radioluminescence device (11) for transmitting the photon generated in the radioluminescence device (11);
photoelectric converters (13; 13a-e; 13g-i) that convert the photon transmitted via each of the plurality of optical fibers (12a-e; 12h,i) to an electrical pulse;
a counter (14; 14a-e; 14g-i) that counts the electrical pulses input from the photoelectric converters (13; 13a-e; 13g-i); **characterized by**
an arithmetic unit (15; 15B) that calculates at least a dosage rate of the radiation on the basis of a counting result by the counter (14; 14a-e; 14h-i);
wherein
in the plurality of optical fibers (12a-e; 12h,i), the optical fibers (12a-e; 12h,i) different in distance between the center of the radioluminescence device (11) and each connected position of the optical fibers (12a-e; 12h, i) on the radioluminescence device (11) are included; and
the arithmetic unit (15; 15B) calculates energy of the radiation on the basis of the ratio of a counting rate of photons transmitted via an optical fiber connected to the center of the radioluminescence device (11) and a counting rate of photons transmitted via optical fibers (12a-e; 12h,i) connected at the vicinity of the center of the radioluminescence device (11)and corrects the counting rate in the center on the basis of the energy of the radiation; and
further, the arithmetic unit (15; 15B) calculates a dosage rate of the radiation on the basis of the energy of the radiation.

2. The radiation monitor (10) according to Claim 1, wherein:
the plurality of photoelectric converters (13; 13a-e; 13g-i) are connected to the plurality of optical fibers (12a-e; 12h,i) in one-to-one correspondence; and
the plurality of counters (14; 14a-e; 14g-i) are connected to the plurality of photoelectric converters (13; 13a-e; 13g-i) in one-to-one correspondence.

3. The radiation monitor (10A) according to Claim 1, comprising:
an optical fiber switch (17) that sequentially switches the optical fiber that transmits the photon to the photoelectric converter out of the plurality of optical fibers (12a-e; 12h,i), wherein:
the arithmetic unit (15; 15B) calculates a dosage rate of the radiation on the basis of identification information of the optical fiber selected by the optical fiber switch (17) and a counting result of the counter (14; 14a-e; 14h-i).

4. The radiation monitor (10) according to Claim 1, comprising:
at least one optical coupler (19; 19h,i) connected to the plurality of optical fibers (12a-e; 12h,i) equal in the distance, wherein:
the photoelectric converter (13; 13a-e; 13g-i) is connected to the optical coupler (19; 19h,i) in one-to-one correspondence; and
the counter (14; 14a-e; 14g-i) is connected to the photoelectric converter (13; 13a-e; 13g-i) in one-to-one correspondence.

5. The radiation monitor (10) according to Claim 1, wherein:
the radioluminescence device (11) is a scintillator including one or more rate earth elements out of ytterbium, neodymium, cerium and praseodymium in yttrium aluminum garnet.

6. The radiation monitor (10) according to any of Claims 1 to 5, wherein:
the radioluminescence device (11) is configured by bundling a plurality of radioluminescence elements connected to the plurality of optical fibers (12a-e; 12h,i) in one-to-one correspondence; and
the radioluminescence device (11) is provided with:
shielding material that intervenes in clearance between the radioluminescence elements different in the distance for shielding light; and/or
a reflector that intervenes in the clearance between the radioluminescence elements different in the distance for reflecting light.

7. The radiation monitor (10) according to claim 1, comprising:
a plurality of attenuation filters that respectively attenuate light being the photons incident from the plurality of optical fibers (12a-e; 12h,i);
an optical coupler (19; 19h,i) connected to the back sides of the plurality of attenuation filters;
a photoelectric converter (13; 13a-e; 13g-i) that converts the photons transmitted via the optical coupler (19; 19h,i) to electrical pulses;
the counter (14; 14a-e; 14g-i) that counts the electrical pulses input from the photoelectric converter (13; 13a-e; 13g-i); and
an arithmetic unit (15; 15B) that operates at least a dosage rate of the radiation on the basis of a counting result by the counter (14; 14a-e; 14h-i).

8. The radiation monitor according to Claim 7, comprising:
at least one another optical coupler (19; 19h,i) connected to the plurality of optical fibers (12a-e; 12h,i) equal in the distance, wherein:
the attenuation filter is connected to the back side of the another optical coupler (19; 19h,i) in one-to-one correspondence.

9. The radiation monitor according to Claim 7, wherein:
the radioluminescence device (11) is a scintillator including one or more rare earth elements out of ytterbium, neodymium, cerium and praseodymium in yttrium aluminum garnet.

10. The radiation monitor according to any of Claims 7 to 9, wherein:
the radioluminescence device (11) is configured by bundling a plurality of radioluminescence elements connected to the plurality of optical fibers (12a-e; 12h,i) in one-to-one correspondence; and
the radioluminescence device (11) is provided with:
shielding material that intervenes in clearance between the radioluminescence elements different in the distance for shielding light; and/or
a reflector that intervenes in the clearance between the radioluminescence elements different in the distance for reflecting light.

## Patentansprüche

1. Strahlungsmonitor (10), der Folgendes umfasst:
eine Radiolumineszenzvorrichtung (11), die ein Photon mit einer auf die Vorrichtung selbst einfallenden Strahlung erzeugt;
mehrere optische Fasern (12a-e; 12h, i), die mit der Radiolumineszenzvorrichtung (11) zum Senden des in der Radiolumineszenzvorrichtung (11) erzeugten Photons verbunden sind;
photoelektrische Umsetzer (13; 13a-e; 13g-i), die das gesendete Photon über jede der mehreren optischen Fasern (12a-e; 12h, i) in einen elektrischen Puls umsetzen;
einen Zähler (14; 14a-e; 14g-i), der die von den photoelektrischen Umsetzern (13; 13a-e; 13g-i) eingegebenen elektrischen Pulse zählt;
**gekennzeichnet durch**
eine arithmetische Einheit (15; 15B), die zumindest eine Dosierrate der Strahlung anhand eines Zählergebnisses durch den Zähler (14; 14a-e; 14h-i) berechnet;
wobei in den mehreren optischen Fasern (12a-e; 12h, i) die optischen Fasern (12-a-e; 12h, i), die in einer Entfernung zwischen dem Mittelpunkt der Radiolumineszenzvorrichtung (11) und jeder verbundenen Position der optischen Fasern (12a-e; 12h, i) auf der Radiolumineszenzvorrichtung (11) unterschiedlich sind, enthalten sind; und
die arithmetische Einheit (15; 15B) die Energie der Strahlung anhand des Verhältnisses einer Zählrate von Photonen, die über eine optische Faser gesendet werden, die mit dem Mittelpunkt der Radiolumineszenzvorrichtung (11) verbunden ist, und einer Zählrate von Photonen, die über optische Fasern (12a-e; 12h, i) gesendet werden, die in der Nähe des Mittelpunkts der Radiolumineszenzvorrichtung (11) verbunden sind, berechnet und die Zählrate in dem Mittelpunkt anhand der Energie der Strahlung korrigiert; und
ferner die arithmetische Einheit (15; 15B) eine Dosierrate der Strahlung anhand der Energie der Strahlung berechnet.

2. Strahlungsmonitor (10) nach Anspruch 1, wobei:
die mehreren photoelektrischen Umsetzer (13; 13a-e; 13g-i) mit den mehreren optischen Fasern (12a-e; 12h, i) in einer Eins-zu-Eins-Korrespondenz verbunden sind; und
die mehreren Zähler (14; 14a-e; 14g-i) mit den mehreren photoelektrischen Umsetzern (13; 13a-e; 13g-i) in einer Eins-zu-Eins-Korrespondenz verbunden sind.

3. Strahlungsmonitor (10A) nach Anspruch 1, der Folgendes umfasst:
einen Schalter (17) optischer Fasern, der nacheinander die optische Faser, die das Photon an den photoelektrischen Umsetzer sendet, aus den mehreren optischen Fasern (12a-e; 12h, i) wechselt, wobei:
die arithmetische Einheit (15; 15B) eine Dosierrate der Strahlung anhand von Identifikationsinformationen der durch den Schalter (17) optischer Fasern ausgewählten optischen Faser und eines Zählergebnisses des Zählers (14; 14a-e; 14h-i) berechnet.

4. Strahlungsmonitor (10) nach Anspruch 1, der umfasst:
mindestens einen optischen Koppler (19; 19h, i), der mit den mehreren in der Entfernung gleichen optischen Fasern (12a-e; 12h, i) verbunden ist, wobei:
der photoelektrische Umsetzer (13; 13a-e; 13g-i) mit dem optischen Koppler (19; 19h, i) in einer Eins-zu-Eins-Korrespondenz verbunden ist; und
der Zähler (14; 14a-e; 14g-i) mit dem photoelektrischen Umsetzer (13; 13a-e; 13g-i) in einer Eins-zu-Eins-Korrespondenz verbunden ist.

5. Strahlungsmonitor (10) nach Anspruch 1, wobei:
die Radiolumineszenzvorrichtung (11) ein Szintillator ist, der ein oder mehrere Elemente seltener Erden aus Ytterbium, Neodym, Cer und Praseodym in Yttrium-Aluminium-Granat enthält.

6. Strahlungsmonitor (10) nach einem der Ansprüche 1 bis 5, wobei:
die Radiolumineszenzvorrichtung (11) durch Bündeln mehrerer Radiolumineszenzelemente, die mit den mehreren optischen Fasern (12a-e; 12h, i) in einer Eins-zu-Eins-Korrespondenz verbunden sind, konfiguriert ist; und
die Radiolumineszenzvorrichtung (11) ausgestattet ist mit:
Abschirmmaterial, das in einen Freiraum zwischen den in der Entfernung unterschiedlichen Radiolumineszenzvorrichtungen zum Abschirmen von Licht eingreift; und/oder
einem Reflektor, der in den Freiraum zwischen den in der Entfernung unterschiedlichen Radiolumineszenzvorrichtungen zum Reflektieren von Licht eingreift.

7. Strahlungsmonitor (10) nach Anspruch 1, der Folgendes umfasst:
mehrere Abschwächungsfilter, die jeweils Licht abschwächen, das die Photonen ist, die von den mehreren optischen Fasern (12a-e; 12h, i) einfallen;
einen optischen Koppler (19; 19h, i), der mit den Rückseiten der mehreren Abschwächungsfilter verbunden ist;
einen photoelektrischen Umsetzer (13; 13a-e; 13g, i), der die über den optischen Koppler (19; 19h, i) gesendeten Photonen in elektrische Pulse umsetzt;
den Zähler (14; 14a-e; 14g-i), der die von dem photoelektrischen Umsetzer (13; 13a-e; 13g-i) eingegebenen elektrischen Pulse zählt; und
eine arithmetische Einheit (15; 15B), die zumindest eine Dosierrate der Strahlung anhand eines Zählergebnisses durch den Zähler (14; 14a-e; 14h-i) anwendet.

8. Strahlungsmonitor nach Anspruch 7, der Folgendes umfasst:
mindestens einen weiteren optischen Koppler (19; 19h, i), der mit den mehreren in der Entfernung gleichen optischen Fasern (12a-e; 12h, i) verbunden ist, wobei:
das Abschwächungsfilter mit der Rückseite des weiteren optischen Kopplers (19; 19h, i) in einer Eins-zu-Eins-Korrespondenz verbunden ist.

9. Strahlungsmonitor nach Anspruch 7, wobei:
die Radiolumineszenzvorrichtung (11) ein Szintillator ist, der ein oder mehrere Elemente seltener Erden aus Ytterbium, Neodym, Cer und Praseodym in Yttrium-Aluminium-Granat enthält.

10. Strahlungsmonitor nach einem der Ansprüche 7 bis 9, wobei:
die Radiolumineszenzvorrichtung (11) durch Bündeln mehrerer Radiolumineszenzelemente, die mit den mehreren optischen Fasern (12a-e; 12h, i) in einer Eins-zu-Eins-Korrespondenz verbunden sind, konfiguriert ist; und
die Radiolumineszenzvorrichtung (11) ausgestattet ist mit:
Abschirmmaterial, das in einen Freiraum zwischen den in der Entfernung unterschiedlichen Radiolumineszenzvorrichtungen zum Abschirmen von Licht eingreift; und/oder
einem Reflektor, der in den Freiraum zwischen den in der Entfernung unterschiedlichen Radiolumineszenzvorrichtungen zum Reflektieren von Licht eingreift.

## Revendications

1. Dispositif de surveillance de rayonnement (10), comprenant :
un dispositif de radioluminescence (11) qui génère un photon avec un rayonnement incident sur le dispositif lui-même ;
une pluralité de fibres optiques (12a-e ; 12h,i) connectées au dispositif de radioluminescence (11) pour transmettre le photon généré dans le dispositif de radioluminescence (11) ;
des convertisseurs photoélectriques (13 ; 13a-e ; 13g-i) qui convertissent le photon transmis via chacune de la pluralité de fibres optiques (12a-e ; 12h,i) en une impulsion électrique ;
un compteur (14 ; 14a-e ; 14g-i) qui compte les impulsions électriques entrées depuis les convertisseurs photoélectriques (13 ; 13a-e ; 13g-i) ;
**caractérisé par**
une unité arithmétique (15 ; 15B) qui calcule au moins un taux de dosage du rayonnement sur la base d'un résultat de comptage par le compteur (14 ; 14a-e ; 14h-i) ;
dans lequel, dans la pluralité de fibres optiques (12a-e ; 12h,i), les fibres optiques (12a-e ; 12h,i) à distance différente entre le centre du dispositif de radioluminescence (11) et chaque position connectée des fibres optiques (12a-e ; 12h,i) sur le dispositif de radioluminescence (11) sont incluses ; et
l'unité arithmétique (15 ; 15B) calcule une énergie du rayonnement sur la base du rapport d'un taux de comptage de photons transmis via une fibre optique connectée au centre du dispositif de radioluminescence (11) et d'un taux de comptage de photons transmis via des fibres optiques (12a-e ; 12h,i) connectées dans le voisinage du centre du dispositif de radioluminescence (11), et corrige le taux de comptage dans le centre sur la base de l'énergie du rayonnement ; et
en outre, l'unité arithmétique (15 ; 15B) calcule un taux de dosage du rayonnement sur la base de l'énergie du rayonnement.

2. Dispositif de surveillance de rayonnement (10) selon la revendication 1, dans lequel :
la pluralité de convertisseurs photoélectriques (13 ; 13a-e ; 13g-i) sont connectés à la pluralité de fibres optiques (12a-e ; 12h,i) dans une correspondance univoque ; et
la pluralité de compteurs (14 ; 14a-e ; 14g-i) sont connectés à la pluralité de convertisseurs photoélectriques (13 ; 13a-e ; 13g-i) dans une correspondance univoque.

3. Dispositif de surveillance de rayonnement (10A) selon la revendication 1, comprenant :
un commutateur de fibre optique (17) qui commute séquentiellement la fibre optique qui transmet le photon au convertisseur photoélectrique hors de la pluralité de fibres optiques (12a-e ; 12h,i), dans lequel :
l'unité arithmétique (15 ; 15B) calcule un taux de dosage du rayonnement sur la base d'une information d'identification de la fibre optique sélectionnée par le commutateur de fibre optique (17) et d'un résultat de comptage du compteur (14 ; 14a-e ; 14h-i).

4. Dispositif de surveillance de rayonnement (10) selon la revendication 1, comprenant :
au moins un coupleur optique (19 ; 19h,i) connecté à la pluralité de fibres optiques (12a-e ; 12h,i) à distance égale, dans lequel :
le convertisseur photoélectrique (13 ; 13a-e ; 13g-i) est connecté au coupleur optique (19 ; 19h,i) dans une correspondance univoque ; et
le compteur (14 ; 14a-e ; 14g-i) est connecté au convertisseur photoélectrique (13 ; 13a-e ; 13g-i) dans une correspondance univoque.

5. Dispositif de surveillance de rayonnement (10) selon la revendication 1, dans lequel :
le dispositif de radioluminescence (11) est un scintillateur incluant un ou plusieurs éléments en terre rare parmi ytterbium, néodyme, cérium et praséodyme dans un grenat d'yttrium et d'aluminium.

6. Dispositif de surveillance de rayonnement (10) selon l'une quelconque des revendications 1 à 5, dans lequel :
le dispositif de radioluminescence (11) est configuré en groupant une pluralité d'éléments de radioluminescence connectés à la pluralité de fibres optiques (12a-e ; 12h,i) dans une correspondance univoque ; et
le dispositif de radioluminescence (11) est doté :
d'un matériau de blindage qui intervient dans un jeu entre les éléments de radioluminescence à distance différente pour faire écran à la lumière ; et/ou
d'un réflecteur qui intervient dans le jeu entre les éléments de radioluminescence à distance différente pour réfléchir la lumière.

7. Dispositif de surveillance de rayonnement (10) selon la revendication 1, comprenant :
une pluralité de filtres d'atténuation qui atténuent respectivement la lumière constituée par les photons incidents depuis la pluralité de fibres optiques (12a-e, 12h,i) ;
un coupleur optique (19 ; 19h,i) connecté aux côtés arrière de la pluralité de filtres d'atténuation ;
un convertisseur photoélectrique (13 ; 13a-e ; 13g-i) qui convertit les photons transmis via le coupleur électrique (19 ; 19h,i) en impulsions électriques ;
le compteur (14 ; 14a-e ; 14g-i) qui compte les impulsions électriques entrées depuis les convertisseurs photoélectriques (13 ; 13a-e ; 13g-i) ; et
l'unité arithmétique (15 ;15B) qui calcule au moins un taux de dosage du rayonnement sur la base d'un résultat de comptage par le compteur (14 ; 14a-e ; 14h-i).

8. Dispositif de surveillance de rayonnement selon la revendication 7, comprenant :
au moins un autre coupleur optique (19 ; 19h,i) connecté à la pluralité de fibres optiques (12a-e ; 12h,i) à distance égale, dans lequel :
le filtre d'atténuation est connecté au côté arrière de l'autre coupleur optique (19 ; 19h,i) dans une correspondance univoque.

9. Dispositif de surveillance de rayonnement selon la revendication 7, dans lequel :
le dispositif de radioluminescence (11) est un scintillateur incluant un ou plusieurs éléments en terre rare parmi ytterbium, néodyme, cérium et praséodyme dans un grenat d'yttrium et d'aluminium.

10. Dispositif de surveillance de rayonnement selon l'une quelconque des revendications 7 à 9, dans lequel :
le dispositif de radioluminescence (11) est configuré en groupant une pluralité d'éléments de radioluminescence connectés à la pluralité de fibres optiques (12a-e ; 12h,i) dans une correspondance univoque ; et
le dispositif de radioluminescence (11) est doté :
d'un matériau de blindage qui intervient dans un jeu entre les éléments de radioluminescence à distance différente pour faire écran à la lumière ; et/ou
d'un réflecteur qui intervient dans le jeu entre les éléments de radioluminescence à distance différente pour réfléchir la lumière.
